# EUROPÄISCHE PATENTANMELDUNG

(11) **EP 1 785 641 A1**
(43) Veröffentlichungstag der Anmeldung: **16.05.2007**
(21) Anmeldenummer: 05024781.6
(22) Anmeldetag: 14.11.2005
(51) Int. Cl.: F16D 67/02, F16D 13/52

(54) **Kupplungseinrichtung für ein Antriebsaggregat eines Freizeitfahrzeuges**

(71) Anmelder: BRP-Rotax GmbH & Co. KG, 4623 Gunskirchen (AT)
(72) Erfinder: Korenjak, Norbert, 4623 Gunskirchen (AT); Kusel, Heinz, 4623 Gunskirchen (AT); Staffelmayr, Walter, 4623 Gunskirchen (AT); Raffelsberger, Patrick, 4623 Gunskirchen (AT)
(74) Vertreter: Harringer, Thomas

(57) **Zusammenfassung**

Die Erfindung betrifft eine Kupplungseinrichtung mit einer entlang einer Longitudinalachse ausgerichteten Kupplung, wobei die Kupplung einen Kupplungskorb, eine Kupplungsnabe, ein zwischen dem Kupplungskorb und der Kupplungsnabe angeordnetes Lamellenpaket, mit einer Anzahl von Reiblamellen und eine Anzahl von Innenlamellen, eine erste und eine zweite Druckplatte, einem Ausrückmechanismus, mit einem Ausrückelement, und einem Stützlager (36) aufweist wobei an dem Stützlager eine Mitnehmerbremse (40) angeordnet ist, über welche, beim Abheben der ersten Druckplatte von dem Lamellenpaket, die erste Druckplatte abbremsbar ist.

## Beschreibung

Die Erfindung betrifft eine Kupplungseinrichtung für ein Antriebsaggregat eines Freizeitfahrzeuges.

Kupplungseinrichtungen von motorisierten Freizeitfahrzeugen sind infolge der kompakten Abmessungen der Fahrzeuge und des damit beschränkten Bauraumes, welcher für den Einbau des Antriebsaggregates verfügbar ist, sehr kompakt ausgelegt, jedoch gleichzeitig höchsten Belastungen ausgesetzt. Insbesondere bei Motorrädern oder sogenannten All-Terrain Fahrzeugen (ATVs, Quads) wird dabei oftmals eine, aus dem Stand der Technik bekannte, Lamellenkupplung zur mechanischen Trennung der Motorwelle von der Getriebewelle verwendet.

Eine Lamellenkupplung weist zwischen einem außen angeordneten Kupplungskorb, welcher nach einer besonderen Ausführungsform direkt oder indirekt von der Motorwelle angetrieben wird, und einer Kupplungsnabe, welche das, über die Kupplung übertragene, Drehmoment weiter auf eine Getriebewelle überträgt, mehrere Kupplungslamellen auf. Als Kupplungslamellen werden dabei Reiblamellen und Innenlamellen verwendet, die im wesentlichen jeweils abwechselnd zwischen Kupplungskorb und Kupplungsnabe angeordnet sind. Nach einer besonderen Ausführungsform sind dabei einerseits die Reiblamellen über eine Außenverzahnung, beispielsweise mittels Außennuten, mit dem Kupplungskorb verbunden und andererseits die Stahllamellen über eine Innenverzahnung mit der Kupplungsnabe gekoppelt. Werden die Kupplungs- und Reiblamellen durch eine seitliche Druckplatte gegeneinander gepreßt, kann auf diese Weise Drehmoment vom Kupplungskorb an die Kupplungsnabe übertragen werden. Bedingt durch die kompakten Abmaße der Kupplungseinrichtung einerseits und durch die hohe Leistungsübertragung andererseits, nimmt die Kühlung und Schmierung der Lamellenkupplung eine besonders wichtige Rolle ein. Um die durch den Reibkontakt der Lamellen entstehende Reibungswärme abzuführen und einen übermäßigen Verschleiß zu verhindern, wird Schmiermittel zur Kupplung gefördert. Das Schmiermittel gelangt dabei auch teilweise in den Bereich zwischen den Kupplungs- und Reiblamellen. Während das Schmiermittel wunschgemäß die entstehende Reibungswärme abführt, verstärkt das Schmiermittel jedoch auch die Neigung der Kupplungslamellen aneinander zu kleben. Diese Neigung zur Adhäsion wird insbesondere dann deutlich, wenn die Kupplung getrennt werden soll. Dabei kann beobachtet werden dass, obwohl die Druckplatte von dem Lamellenpaket abgehoben ist, weiterhin ein nennenswertes Drehmoment über die Kupplung übertragen wird. Man spricht in diesem Fall vom sogenannten "Drag-Effekt".

Beim Einlegen eines Ganges aus dem Leerlauf vergehen in der Regel einige Zeit bis nach dem Ziehen der Kupplung der gewünschte Gang eingelegt wird. Aufgrund der Massenträgheit des Systems rotiert die Getriebewelle bei getrennter Kupplung mit sich verringernder Drehzahl weiter so dass die Getriebewelle in der Regel beim Einlegen des Ganges noch nicht zum Stillstand gekommen ist. Typischerweise erfolgt deshalb beim Einlegen eines Ganges aus dem Leerlauf und dem dabei auftretenden Kontakt der rotierenden Getriebezahnräder ein störendes Geräusch. Die Neigung der Getriebewelle bei getrennter Kupplung Nachzulaufen wird durch den "Drag-Effekt" wesentlich verstärkt.

Aus dem Stand der Technik sind zur Verringerung des Gangeinlegegeräusches verschiedene Herangehensweisen bekannt. Im wesentlichen betreffen diese Herangehensweise eine Optimierung der Bauart der Kupplung, wie beispielsweise in der Veröffentlichung EP1058018A2 der Fall, oder eine Optimierung der Innenlamellen, wie aus der Veröffentlichung FR2607884 bekannt.

Weiters ist es aus dem Stand der Technik, insbesondere aus der Patentschrift DE3917404A1, bekannt, mittels komplizierter und entsprechend teurer Ventilvorrichtungen und zusätzlichen speziellen Ölkanälen die Ölzufuhr zur Kupplung zu optimieren. Dabei soll der Öleintrag in den Bereichen der Teillast und des Leerlaufes des Antriebsaggregates verringert werden.

Alle diese Verbesserungen erweisen sich in der Praxis als untauglich das beschriebene Problem zu lösen. Es ist deshalb eine der Aufgaben der vorliegenden Erfindung eine Kupplungseinrichtung nach dem Oberbegriff des Anspruchs 1 zu entwickeln, durch welche, auch bei Einsatz eines Schmier- und/oder Kühlmittels eine möglichst vollständige und verläßliche Trennung der Kupplungslamellen und eine effiziente Verminderung oder Vermeidung des "GangeinlegeGeräusches" verwirklichbar ist.

Diese Aufgabe wird entsprechend dem kennzeichnenden Teil des Anspruchs 1 gelöst.

Dadurch, dass die Kupplung eine Mitnehmerbremse aufweist, über welche selektiv beim Abheben der ersten Druckplatte von dem Lamellenpaket, die erste Druckplatte abbremsbar ist, wird die Rotation der Druckplatte beim Trennen der Kupplung verhindert bzw. entsprechend vermindert.

Da die erste Druckplatte nach einer Ausführungsform der Erfindung axial verschiebbar, beispielsweise über eine Verschraubung an der Kupplungsnabe, befestigt ist, wird durch die vorschlagene Mitnehmerbremse auch die Kupplungsnabe abgebremst, und auf diese Weise die Übertragung von Drehmoment über die Kupplungseinrichtung vermindert oder gänzlich verhindert.

Entsprechend einer Ausführungsform der vorliegenden Kupplungseinrichtung ist die Mitnehmerbremse getrennt von dem Stützlager als separates Bauteil ausgeführt. Diese besondere Ausführung hat den wesentlichen Vorteil, dass die Mitnehmerbremse einfach in bestehende Kupplungseinrichtungen integriert werden kann, ohne dass aufwändige Änderungen an der Kupplungseinrichtung notwendig wären.

Entsprechend einer Ausführungsform der vorliegenden Kupplungseinrichtung ist die Mitnehmerbremse zwischen dem Stützlager und dem Ausrückelement angeordnet.

Nach einer Ausführungsform der Erfindung sind das Stützlager und die Mitnehmerbremse zentrisch an der Longitudinalachse der Kupplungseinrichtung angeordnet.

Nach einer weiteren Ausführungsform der Erfindung weist das Stützlager ein erstes und ein zweites Stützlagerelement auf, wobei das erste Stützlagerelement rotationsfest mit der ersten Druckplatte verbunden ist.

Entsprechend einer weiteren Ausführungsform der vorliegenden Erfindung ist das Ausrückelement feststehend gelagert, und weist die Mitnehmerbremse eine erste Reibfläche zum Reibkontakt mit dem Ausrückelement und eine zweite Reibfläche zum Reibkontakt mit dem ersten Stützlagerelement auf.

Vorzugsweise ist die Mitnehmerbremse axial verschiebbar zwischen dem Ausrückelement und dem Stützlager gelagert, so dass beim Ausrückvorgang die Mitnehmerbremse von dem Ausrückelement gegen das erste Stützlagerelement pressbar ist.

Nach einer weiteren Ausführungsform der Erfindung ist das Stützlager als Wälzlager mit einem Innen- und einem Außenring ausgeführt, wobei das erste Stützelement dem Außenring und das zweite Stützelement dem Innenring des Wälzlagers entspricht und weiters die Mitnehmerbremse als Bremsscheibe ausgeführt ist, wobei die Bremsscheibe bei, von dem Lamellenpaket, abgehobener Druckplatte, an dem Außenring des Wälzlagers anliegt und auf diese Weise der Außenring des Wälzlagers durch Reibkontakt abbremsbar ist.

Nach einer weiteren Ausführungsform der Erfindung weist die Bremsscheibe eine zentral angeordnete Öffnung auf, in welcher zumindest teilweise das Ausrückelement angeordnet.

Nach einer weiteren Ausführungsform der Erfindung weist die Bremsscheibe zumindest eine sich von der zentral angeordneten Öffnung im wesentlichen radial nach außen erstreckende Ausnehmung auf, durch welche ein Schmiermittel zwischen die Bremsscheibe und den Außenring des Wälzlagers förderbar ist.

Nach einer weiteren Ausführungsform der Erfindung weist die Kupplungseinrichtung eine Getriebewelle und eine Motorwelle auf, wobei die Getriebewelle, bei geschlossener Kupplung, über die Kupplungsnabe, das Lamellenpaket und den Kupplungskorb mit der Motorwelle verbunden ist, und wobei die Getriebewelle eine Bohrung aufweist über welche die Mitnehmerbremse mit Schmiermittel versorgbar ist.

Nach einer weiteren Ausführungsform der Erfindung weist die Bohrung der Getriebewelle ein erstes und ein der Kupplung benachbart angeordnetes zweites Ende auf, wobei das zweite Ende der Bohrung der Getriebewelle über ein Verschlußstück verschlossen ist und wobei das Verschlußstück eine Öffnung aufweist durch welche Schmiermittel aus der Bohrung zur Mitnehmerbremse gelangt.

Nach einer weiteren Ausführungsform der Erfindung weist die Anzahl von Reiblamellen zumindest zwei Reiblamellen und die Anzahl Innenlamellen zumindest zwei Innenlamellen auf, wobei jeweils eine der zumindest zwei Reiblamellen bezüglich der Longitudinalachse der Kupplungseinrichtung abwechselnd mit jeweils einer der zumindest zwei Innenlamellen zwischen der Kupplungsnabe und dem Kupplungskorb angeordnet ist.

Nach einer weiteren Ausführungsform der Erfindung ist der Kupplungskorb mit Innennuten versehen und weist die Kupplungsnabe eine Außenverzahnung auf, und ist weiters das Lamellenpaket zwischen den Innennuten des Kupplungskorbes und der Außenverzahnung der Kupplungsnabe angeordnet.

Nach einer weiteren Ausführungsform der Erfindung weist der Ausrückmechanismus ein manuell betätigbares Verstellelement, insbesondere einen Kupplungshebel, mit welchem der Ausrückmechanismus steuerbar ist, auf. Neben einem manuell schaltbaren Getriebe ist entsprechend anderen Ausführungsformen der Erfindung die Anwendung der Erfindung bei einer automatischen oder einer semi-automatischen Kupplung möglich-

Die Erfindung betrifft weiters ein motorbetriebenes Kleinfahrzeug, insbesondere Motorrad, mit einem Rahmen und einem am Rahmen befestigten Antriebseinheit, wobei die Antriebseinheit einen Verbrennungsmotor und ein Getriebe aufweist und, vorzugsweise zwischen dem Verbrennungsmotor und dem Getriebe, eine Kupplungseinrichtung nach einem der Ansprüche 1 bis 14 angeordnet ist. Nach verschiedenen besonderen Ausführungsformen der Erfindung handelt es sich bei dem motorbetriebenen Kleinfahrzeug um ein ATV oder ein zwei- oder dreirädriges Motorrad.

Nach einer weiteren Ausführungsform der Erfindung ist an dem Rahmen des Kleinfahrzeuges eine Lenkstange vorgesehen, wobei das manuelle Verstellelement zur Steuerung des Ausrückmechanismus der Kupplung, insbesondere der Kupplungshebel, auf der Lenkstange angeordnet ist.
Die Erfindung ist entsprechend einer besonders bevorzugten Ausführungform anhand von schematischen Zeichnungen näher erläutert. Es zeigen:
Fig. 1: eine Schnitt-Ansicht einer Ausführungsform einer Antriebseinrichtung für ein
Kleinfahrzeug mit einer Kupplungseinrichtung entsprechend der vorgestellten Erfindung
Fig. 2: eine Seitenansicht der Antriebseinrichtung nach Fig. 1
Fig. 3: eine Detailansicht der Kupplungseinrichtung nach Fig. 1
Fig. 4: eine weitere Detailansicht der Kupplung nach Fig. 1
Fig. 5: eine Detailansicht der Mitnehmerbremse nach Fig. 4 / Seite A
Fig. 6: eine weitere Detailansicht der Mitnehmerbremse nach Fig. 4 / Seite B
Fig. 7: eine Seitenansicht einen Motorrades mit einer Antriebseinheit mit einer
Kupplungseinrichtung nach Fig. 3 und Fig. 4
Fig. 8: eine Vorderansicht des Motorrades nach Fig. 7

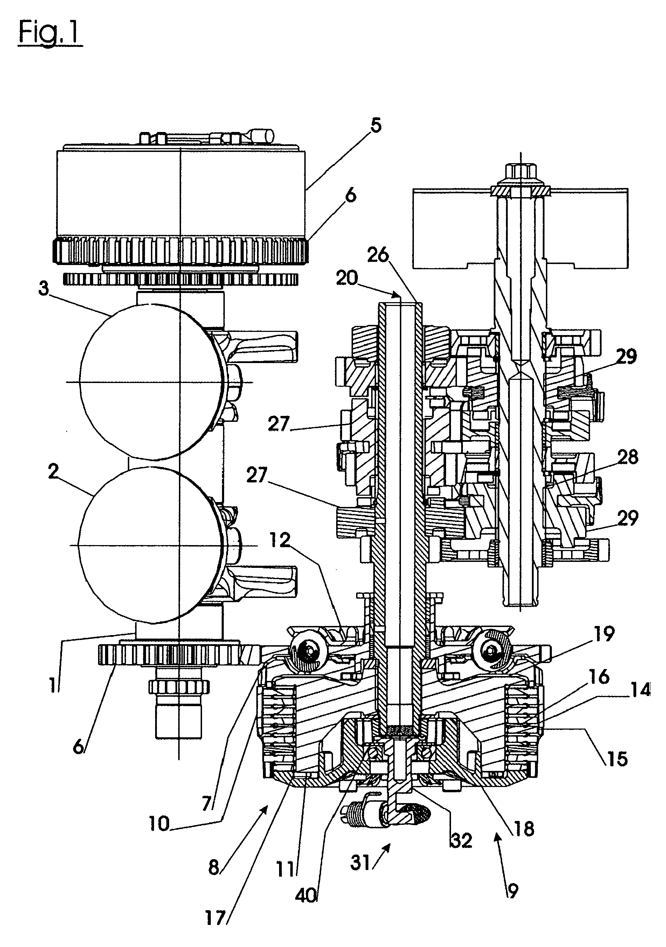

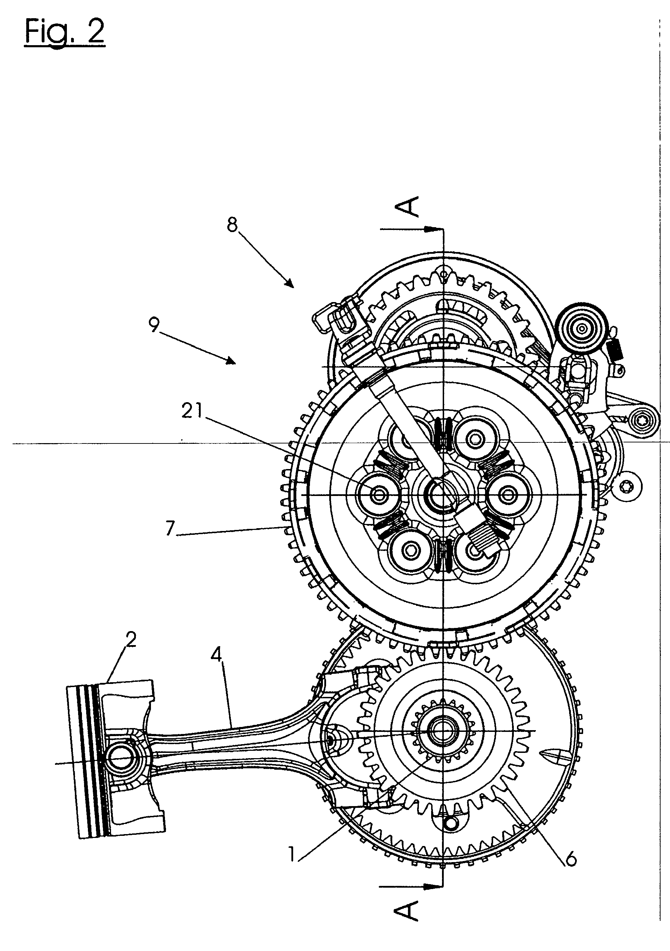

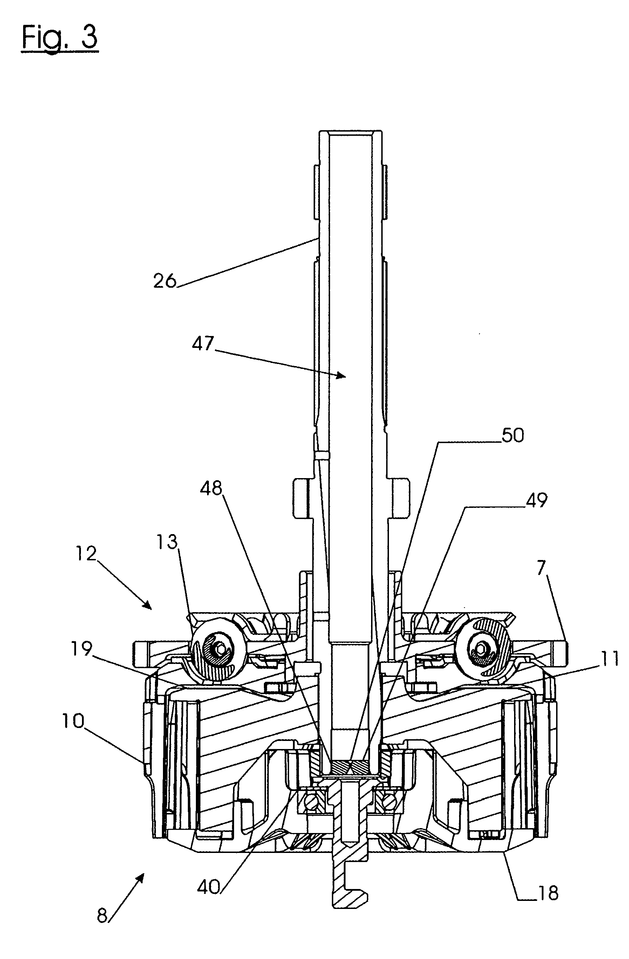

Fig. 1 und Fig. 2 zeigen eine Antriebseinrichtung mit einer Kurbelwelle 1 sowie zwei daran angeordneten Kolben 2 und 3. Kolben 2 ist dabei, wie dargestellt, mit einem entsprechenden Kolbenpleuel 4 mit der Kurbelwelle 1 verbunden. Die Kurbelwelle 1 weist zwei Enden auf, wobei an einem ersten Ende der Kurbelwelle 1 der Generator 5 und an dem zweiten Ende der Kurbelwelle 1 ein Abtriebszahnrad 6 angeordnet ist. Dieses Abtriebszahnrad 6 ist mit einem Antriebszahnrad 7 welches mit der Kupplung 8 der Kupplungseinrichtung 9 geeignet gekoppelt ist, verbunden. Wie aus den Fig. 1- 4 ersichtlich weist die Kupplung 8 einen Kupplungskorb 10 sowie eine Kupplungsnabe 11 auf. Das Antriebszahnrad 7 ist über ein geeignetes Dämpfungselement 12, das, in aus dem Stand der Technik bekannter Weise, eine Anzahl von Federn 13, insbesondere Spiral- bzw. Torsionsfedern, aufweist, mit dem Kupplungskorb 10 verbunden. Durch das Dämpfungselement 12 werden auftretende Drehschwingungen gedämpft bzw. teilweise abgebaut.

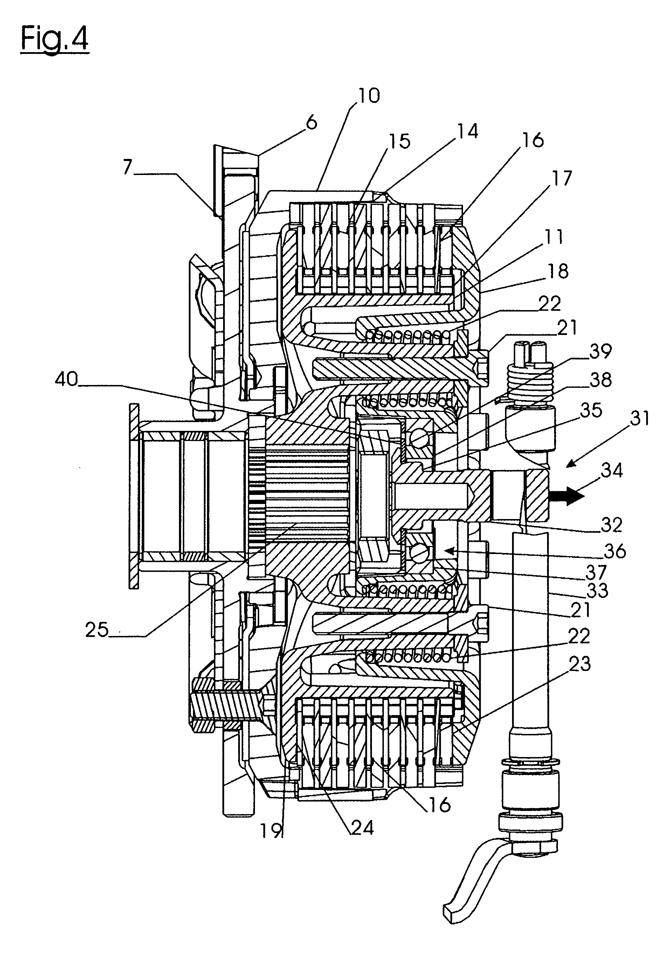

Wie aus den Fig. 1 und 4 ersichtlich weist der Kupplungskorb 10 eine Innenverzahnung 14 auf. Nach einer Ausführungsform weist die Innenverzahnung 14 mehrere Nuten, auch Innennuten genannt, auf. Über diese Innenverzahnung 14 werden Reiblamellen 15 angetrieben, die eine mit der Innenzahnung 14 des Kupplungskorbes 10 korrespondierende Außenverzahnung bzw. Außennuten aufweisen. Die Reiblamellen 15 weisen einen Belagträger und eine entsprechenden Reibbeschichtung bzw. einen entsprechenden Kupplungsbelag auf. Von Kupplungsbelägen wird eine gute Hitzebeständigkeit, hohe Verschleißfestigkeit sowie eine hohe, und über einen großen Temperaturbereich konstant bleibende, Reibungszahl erwartet. Kupplungsbeläge werden entweder aus organischen, keramischen oder metallischen Belägen hergestellt. Wie aus den schematischen Fig. 1 und 4 weiters ersichtlich ist zwischen zwei Reiblamellen jeweils eine Innenlamelle 16 angeordnet, die über eine Innenverzahnung mit einer entsprechenden Außenverzahnung 17 der Kupplungsnabe 11 verbunden ist. Entsprechend einer Ausführungsform sind die Innenlamellen 16 dabei beispielsweise als Stahllamellen ausgeführt. Die Reiblamellen 15 und die Innenlamellen 16 bilden damit das Lamellenpaket der Kupplung. Werden die Reiblamellen 15 und die Innenlamellen 16 zwischen einer ersten Druckplatte 18 und einer zweiten Druckplatte 19 zusammengepresst, kann durch einen entsprechenden Reibkontakt zwischen den Reiblamellen 15 und den Innenlamellen 16 Drehmoment von dem Kupplungskorb 10 an die Kupplungsnabe 11 übertragen werden. Während die zweite Druckplatte 19, wie dargestellt, als Teil der Kupplungsnabe 11 ausgeführt ist, ist die erste Druckplatte 18 axial, entlang der Longitudinalachse 20 der Kupplungseinrichtung, gegenüber der Kupplungsnabe 11, verfahrbar bzw. ausrückbar angeordnet. Die erste Druckplatte 18 ist dabei über ein Verschraubung 21, axial verschiebbar, an der Kupplungsnabe 11 befestigt. Im geschlossenen Zustand drücken Federelemente, insbesondere Torsionsfedern 22, eine erste Kontaktfläche 23 der ersten Druckplatte 18 gegen das Lamellenpaket. Dabei wird das Lamellenpaket von der ersten Druckplatte 18 gegen die zweite Kontaktfläche 24 der zweiten Druckplatte 19 gepreßt. Durch den sich hierbei einstellenden Reibkontakt zwischen den Reib- und Innenlamellen wird Drehmoment von dem Kupplungskorb an die Kupplungsnabe übertragen. Nachdem die Kupplungsnabe 11 über eine geeignete Innenverzahnung 25 mit einer Getriebeeingangswelle 26 verbunden ist, kann auf diese Weise Drehmoment von der Motorwelle bzw. Kurbelwelle 1 über die Kupplung 8 auf die Getriebeeingangswelle 26 übertragen werden. Von der Getriebeeingangswelle 26 wird über ein Schaltgetriebe mit einer Anzahl von, auf der Getriebeeingangswelle 26 angeordneten, Getriebezahnräder 27 und einer Anzahl von, auf einer Getriebeausgangswelle 28 angeordneten, Getriebezahnräder 29, das Drehmoment mit einer geeigneten Über- oder Untersetzung über eine Abtriebseinrichtung 30, insbesondere ein Kettenrad oder ein Zahnriemenrad (wie dargestellt), auf eine Antriebsachse bzw. ein Antriebsrad eines Fahrzeuges übertragen.

Wie aus Fig. 1, Fig. 3 und Fig. 4 ersichtlich, ist die Kupplung 8 mit einem Ausrückmechanismus 31 ausgestattet. Dieser Ausrückmechanismus weist ein Ausrückelement 32 auf, dass axial entlang der Longitudinalachse 20 bewegbar ist. Über eine Ausrückstange 33 kann das Ausrückelement 32 in Richtung der Pfeile 34 ausgerückt werden. Bei diesem Ausrückvorgang wird über einen sich erweiternden hakenförmiges Teil 35 des Ausrückelementes 32 die erste Druckplatte 18 in Richtung der Pfeile 34 ausgerückt und damit von dem Lamellenpaket abgehoben. Wie insbesondere in Fig. 4 ersichtlich, ist die erste Druckplatte 18 über ein Stütz- oder Drucklager 36 gelagert. Das Stützlager 36 ist dabei nach einer besonderen Ausführungsform der erfindungsgemäßen Vorrichtung als Wälzlager mit einem Außenring 37, einem Innenring 38, sowie dazwischen gelagerten Wälzkörper 39 ausgeführt. Das Wälzlager 36 nimmt dabei die durch das Ausrückelement 32 beim Ausrückvorgang ausgeübte Druckkraft auf und rückt gemeinsam mit dem Ausrückelement 32 und der ersten Druckplatte 18 aus.

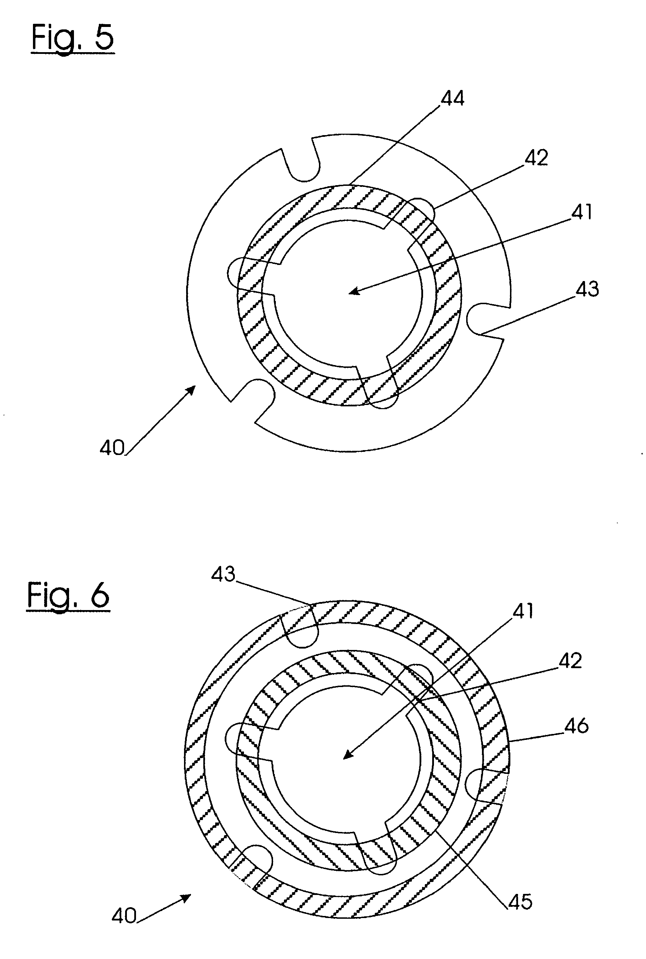

Wie aus Fig.1, Fig. 3 und Fig. 4 ersichtlich, ist zwischen dem hakenförmigen Teil 35 des Ausrückelementes 32 und dem Stützlager 36 eine Mitnehmerbremse 40 angeordnet. Diese Mitnehmerbremse ist, wie in Fig. 5 und 6 gezeigt, als Anlaufscheibe 40 ausgeführt und weist eine zentrale Öffnung 41, sowie radial nach außen weisende Ausnehmungen 42 und radial nach innen weisende Ausnehmungen 43 auf. Während in der zentrale Öffnung 41 im eingebauten Zustand das Ausrückelement 32 Aufnahme findet, sind die radialen Ausnehmungen 42 und 43 zur Führung von eingebrachtem Schmiermittel vorgesehen. Während in Fig. 5 die, der Getriebeeingangswelle zugewandte, Seite A der Mitnehmerbremse 40 dargestellt ist, wird in Fig. 6 die, der Getriebeeingangswelle abgewandte, Seite B der Mitnehmerbremse 40 dargestellt.

Wie aus den beiliegenden schematischen Zeichnungen ersichtlich, ergeben sich nach einer besonderen Ausführungsform der Erfindung, bei geschlossener Kupplung 8 zwischen dem hakenförmigen Teil 35 des Ausrückelementes 32 einerseits und der Mitnehmerbremse 40 andererseits sowie zwischen der Mitnehmerbremse 40 und dem Stützlager 36 geringe Luftspalte. Auf diese Weise wird erreicht, dass, bei geschlossener Kupplung, die erste Druckplatte 18 gemeinsam mit der Kupplungsnabe 11 relativ zu dem feststehenden Ausrückelement 32 rotieren kann. Dabei werden die Kupplungs- und Reiblamellen 16, 15 durch die Kraft der Kupplungsfedern 22 zwischen der ersten Druckplatte 18 und der zweiten Druckplatte 19 aneinander gepresst und auf diese Weise ein Kraftschluß in der Kupplungseinrichtung 9 hergestellt.

Beim Ausrückvorgang wird das Ausrückelement 32 durch die Ausrückstange 33 in Richtung der Aurückrichtung 34 verschoben. Dabei drückt der hakenförmige Teil 35 der des Ausrückelements 32 gegen die Mitnehmerbremse 40 und preßt die Mitnehmerbremse 40 gegen den Innenring 35 und den Außenring 37 des Wälzlagers 36. In Folge des Reibkontaktes zwischen dem nicht rotierenden, feststehenden Ausrückelement 32 und der Mitnehmerbremse 40 einerseits sowie der Mitnehmerbremse 40 und dem Innenring bzw. zweiten Stützelement 35 und Außenring bzw. dem ersten Stützelement 37 des Wälzlagers 36 werden der Innenring 35 und der Außenring 37 des Wälzlagers 36 abgebremst. Nachdem der Außenring 37 des Wälzlagers rotationsfest mit der Druckplatte 18 und über die Druckplatte 18 mit der Kupplungsnabe 11 der Kupplung 8 verbunden ist, werden auf diese Weise auch die Rotation der ersten Druckplatte 18 sowie die Rotation der Kupplungsnabe 11 abgebremst. War es im Stand der Technik ein häufiges Problem, dass die Kupplungsnabe infolge, durch Schmiermittel, verklebter Kupplungslamellen auch bei bereits abgehobener bzw. ausgerückter erster Druckplatte 18 weiter durch den Kupplungskorb in Rotation versetzt wurde, wird durch die hiermit vorgeschlagene Lösung erreicht, dass durch direkte Einwirkung der Mitnehmerbremse die Kupplungsnabe bei geöffneter Kupplung abgebremst wird.

Die Mitnehmerbremse 40 ist nach einer bevorzugten Ausführungsform der Erfindung aus einem besonders verschleißbeständigen Material, beispielsweise aus einem wärmebehandelten, vorzugsweise gehärteten oder beschichteten, Metall, insbesondere Federstahl hergestellt. Die Anlaufscheibe 40 weist eine erste, insbesondere kreisringförmige, Reibfläche 44 auf, an welcher die Anlaufscheibe 40 von dem feststehenden hakenförmigen Teil 35 des Ausrückelementes 32 kontaktiert wird. Weiters weist die Anlaufscheibe eine in Bezug auf die erste Reibfläche 44 auf der gegenüberliegenden Seite der Anlaufscheibe 44 eine zweite, insbesondere kreisringförmige, Reibfläche 45 auf, an welcher der Innenring 38 des Wälzlagers 36 kontaktiert wird und eine dritte, insbesondere kreisförmige, Reibfläche 46 auf, an welcher der Außenring 37 des Wälzlagers 36 bei Ausrückvorgang berührt wird. Da die Abbremsung des Außenringes bzw. des ersten Stützelementes des Stützlagers wesentlich ist, kann nach einer besonderen Ausführungsform der Erfindung auf die Berührung zwischen Mitnehmerbremse und dem Innenring bzw. dem zweiten Stützelement des Stützlagers verzichtet werden.

Um die in der Kupplung durch den Reibkontakt der Kupplungslamellen entstehende Wärme zumindest teilweise abzuführen, wird über eine geeignete Bohrung 47 in der Getriebeeingangswelle 26 Schmiermittel, insbesondere Öl, zur Kupplung gefördert. Die Getriebeeingangswelle 26 weist dabei an ihrem der Kupplung 8 zugewandten Ende eine Öffnung 48 auf, die über einen Verschluß 49 geeignet verschlossen wird. Durch eine in dem Verschluß 49 vorgesehene und abgestimmte Öffnung 50 gelangt Öl von der Bohrung 47 der Getriebeeingangswelle in die Kupplung 8. Nach einer Ausführungsform ist die Öffnung 50 dabei im wesentlichen zentrisch entlang der Longitudinalachse 20 angeordnet. Dabei gelangt Schmiermittel zu der Mitnehmerbremse 40 und tritt durch die Ausnehmungen 42 und 43 an die Reibflächen 44, 45 und 46. Durch Zuführung von Schmiermittel an die Reibflächen 44, 45 und 46 wird der Verschleiß an diesen Flächen minimiert und entstehende Wärme, welche die entsprechenden Reibflächen an der Mitnehmerbremse sowie die korrespondierenden Kontaktflächen an dem Stützlager 36 sowie an dem hakenförmigen Teil 35 des Ausrückelementes 32 in Mitleidschaft ziehen würde, zumindest teilweise abgeführt. Darüber hinaus wird eine über die Gebrauchsdauer der Mitnehmerbremse 40 durch Verschleiß bedingte eventuell verringerte Bremswirkung durch eine im Laufe der Zeit erhöhte Schmiegung des Stützlagers 36 kompensiert.

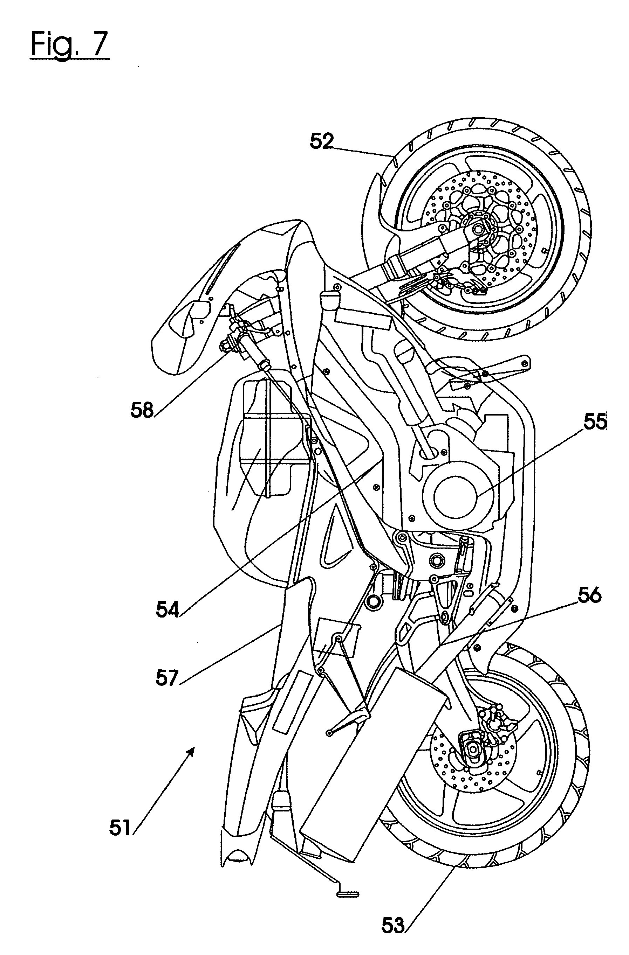

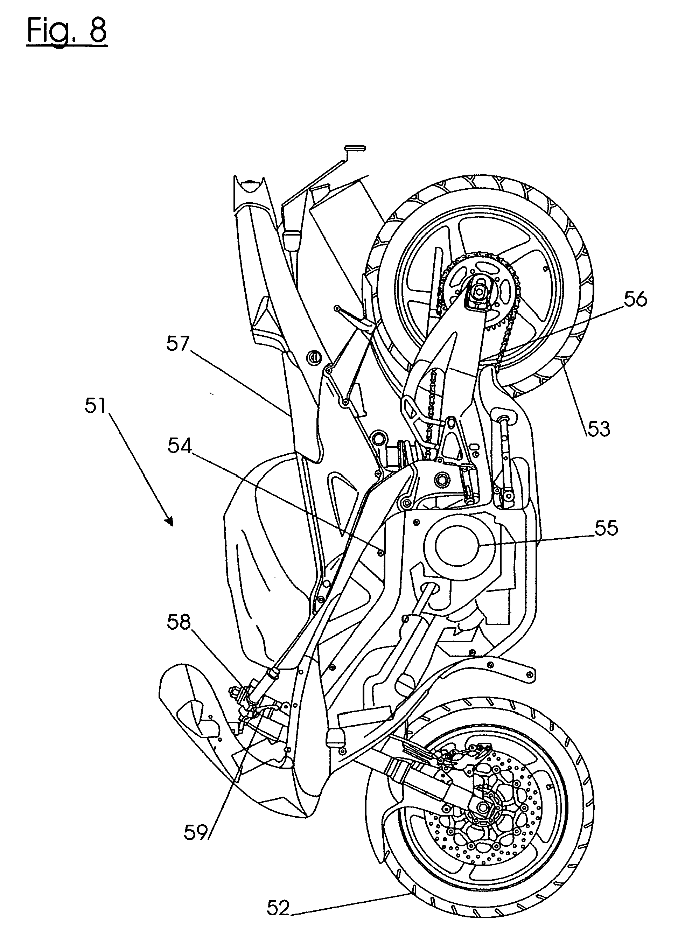

In Fig. 7 und Fig. 8 ist schematisch ein Motorrad 51 dargestellt. Dabei weist das Motorrad 51 einen Vorderreifen 52 sowie einen Hinterreifen 53 auf. Obwohl das dargestellte Motorrad nur einen Vorderreifen aufweist, ist die Anwendung der erfindungsgemäßen Kupplungseinrichtung nicht auf diesen Fall beschränkt und selbstverständlich auch bei einem mehrspurigen Fahrzeug, insbesondere einem 3-rädrigen Motorrad, oder einem sogenannten All-Terrain Fahrzeug (ATV, Quad) möglich. Das Motorrad weist einen Rahmen 54 mit einem daran befestigten Antriebsaggregrat 55 sowie einer an dem Rahmen befestigten Hinterradschwinge 56 auf. Das Antriebsaggregat 55 weist ein Motorgehäuse mit einer darin untergebrachten erfindungsgemäßen Kupplungseinrichtung auf. Am Fahrzeug ist weiters ein Motorradsattel 57 sowie eine Lenkstange 58 mit einem daran befestigten Kupplungshebel 59 angeordnet.

## Patentansprüche

1. Kupplungseinrichtung mit einer entlang einer Longitudinalachse ausgerichteten Kupplung, wobei die Kupplung folgende Merkmale aufweist:
- einen Kupplungskorb, und
- eine Kupplungsnabe, sowie
- ein zwischen dem Kupplungskorb und der Kupplungsnabe im Kupplungskorb angeordnetes Lamellenpaket über welches der Kupplungskorb mit der Kupplungsnabe koppelbar ist, wobei das Lamellenpaket eine Anzahl von Reiblamellen und eine Anzahl von Innenlamellen aufweist; und
- eine erste und eine zweite Druckplatte, wobei die erste Druckplatte, auf einer, entlang der Longitudinalachse gesehen, ersten Seite des Lamellenpakets angeordnet ist und die zweite Druckplatte auf einer, entlang der Longitudinalachse gesehen, zweiten Seite des Lamellenpakets angeordnet ist; und
- einem Ausrückmechanismus, mit
- einem axial ausrückbaren Ausrückelement, welche mit der ersten Druckplatte so verbunden ist, dass ein axiales Ausrücken des Ausrückelementes ein Abheben oder ein Anpressen der ersten Druckplatte an das Lamellenpaket und damit ein entsprechendes Lösen oder Schließen der Kupplung zur Folge hat; und
- einem Stützlager, wobei das Stützlager funktionell zwischen der ersten Druckplatte und dem Ausrückelement angeordnet ist und die erste Druckplatte mit dem Ausrückelement verbindet,
**dadurch gekennzeichnet, dass** die Kupplung eine Mitnehmerbremse aufweist, über welche selektiv beim Abheben der ersten Druckplatte von dem Lamellenpaket die erste Druckplatte abbremsbar ist.

2. Kupplungseinrichtung nach Anspruch 1, **dadurch gekennzeichnet, dass** die Mitnehmerbremse getrennt von dem Stützlager als separates Bauteil ausgeführt ist.

3. Kupplungseinrichtung nach Anspruch 1 oder 2, **dadurch gekennzeichnet, dass** die Mitnehmerbremse zwischen dem Stützlager und dem Ausrückelement angeordnet ist.

4. Kupplungseinrichtung nach einem der Ansprüche 1 bis 3, **dadurch gekennzeichnet, dass** das Stützlager und die Mitnehmerbremse zentrisch an der Longitudinalachse der Kupplungseinrichtung angeordnet sind.

5. Kupplungseinrichtung nach einem der Ansprüche 1 bis 4, **dadurch gekennzeichnet, dass** das Stützlager ein erstes und ein zweites Stützlagerelement aufweist, wobei das erste Stützlagerelement rotationsfest mit der ersten Druckplatte verbunden ist.

6. Kupplungseinrichtung nach Anspruch 5, **dadurch gekennzeichnet, dass** das Ausrückelement feststehend gelagert ist, und die Mitnehmerbremse eine erste Reibfläche zum Reibkontakt mit dem Ausrückelement und eine zweite Reibfläche zum Reibkontakt mit dem ersten Stützlagerelement aufweist.

7. Kupplungseinrichtung nach Anspruch 6, **dadurch gekennzeichnet, dass** die Mitnehmerbremse verschiebbar zwischen dem Stützlager und dem Ausrückelement gelagert ist, so dass die Mitnehmerbremse beim Ausrückvorgang von dem Ausrückelement gegen das erste Stützlagerelement pressbar ist.

8. Kupplungseinrichtung nach einem der Ansprüche 1 bis 7, **dadurch gekennzeichnet, dass** das Stützlager als Wälzlager mit einem Innen- und einem Außenring ausgeführt ist, wobei der Außenring als das erste Stützelement und der Innenring des Wälzlagers als das zweite Stützelement vorgesehen ist und weiters die Mitnehmerbremse als Bremsscheibe ausgeführt ist, wobei die Bremsscheibe bei, von dem Lamellenpaket, abgehobener Druckplatte, an dem Außenring des Wälzlagers anliegt und auf diese Weise der Außenring des Wälzlagers durch Reibkontakt abbremsbar ist.

9. Kupplungseinrichtung nach Anspruch 8, **dadurch gekennzeichnet, dass** die Bremsscheibe eine zentral angeordnete Öffnung aufweist in welcher zumindest teilweise das Ausrückelement angeordnet ist.

10. Kupplungseinrichtung nach Anspruch 9, **dadurch gekennzeichnet, dass** die Bremsscheibe zumindest eine sich von der zentral angeordneten Öffnung im wesentlichen radial nach außen erstreckende Ausnehmung aufweist, durch welche ein Schmiermittel zwischen die Bremsscheibe und den Außenring des Wälzlagers förderbar ist.

11. Kupplungseinrichung nach einem der Ansprüche 1 bis 10, **dadurch gekennzeichnet, dass** die Kupplungseinrichtung eine Getriebewelle und eine Motorwelle aufweist, wobei die Getriebewelle, bei geschlossener Kupplung, über die Kupplungsnabe, das Lamellenpaket und den Kupplungskorb mit der Motorwelle verbunden ist, und wobei die Getriebewelle eine Bohrung aufweist über welche die Mitnehmerbremse mit Schmiermittel versorgbar ist.

12. Kupplungseinrichtung nach Anspruch 11, **dadurch gekennzeichnet, dass** die Bohrung der Getriebewelle ein erstes und ein, der Kupplung benachbart angeordnetes, zweites Ende aufweist, wobei das zweite Ende der Bohrung der Getriebewelle über ein Verschlußstück verschlossen ist und wobei das Verschlußstück eine Öffnung aufweist durch welche Schmiermittel aus der Bohrung zur Mitnehmerbremse gelangt.

13. Kupplungseinrichtung nach einem der Ansprüche 1 bis 12, **dadurch gekennzeichnet, dass** die Anzahl von Reiblamellen zumindest zwei Reiblamellen und die Anzahl Innenlamellen zumindest zwei Innenlamellen aufweist, wobei jeweils eine der zumindest zwei Reiblamellen bezüglich der Longitudinalachse der Kupplungseinrichtung abwechselnd mit jeweils einer der zumindest zwei Innenlamellen zwischen der Kupplungsnabe und dem Kupplungskorb angeordnet ist.

14. Kupplungseinrichtung nach einem der Ansprüche 1 bis 13, **dadurch gekennzeichnet, dass** der Kupplungskorb mit Innennuten versehen ist und die Kupplungsnabe eine Außenverzahnung aufweist, und das Lamellenpaket zwischen den Innennuten des Kupplungskorbes und der Außenverzahnung der Kupplungsnabe angeordnet ist.

15. Kupplungseinrichtung nach einem der Ansprüche 1 bis 14, **dadurch gekennzeichnet, dass** der Ausrückmechanismus ein manuell betätigbares Verstellelement, insbesondere einen Kupplungshebel, mit welchem der Ausrückmechanismus steuerbar ist, aufweist.

16. Motorbetriebenes Kleinfahrzeug, insbesondere Motorrad, mit einem Rahmen und einem am Rahmen befestigten Antriebseinheit, wobei die Antriebseinheit einen Verbrennungsmotor und ein Getriebe und eine, vorzugsweise zwischen dem Verbrennungsmotor und dem Getriebe angeordnete, Kupplungseinrichtung nach einem der Ansprüche 1 bis 15 aufweist.
